Europäisches Patentamt

European Patent Office

Office européen des brevets

(11) Publication number: **0 293 805 B1**

## EUROPEAN PATENT SPECIFICATION

(45) Date of publication of patent specification: **22.07.92**  (51) Int. Cl.⁵: **G11B 15/60**

(21) Application number: **88108622.7**

(22) Date of filing: **30.05.88**

(54) **Guide element structure engageable in sliding contact with a magnetic support.**

(30) Priority: **01.06.87 IT 2074387**

(43) Date of publication of application:
**07.12.88 Bulletin 88/49**

(45) Publication of the grant of the patent:
**22.07.92 Bulletin 92/30**

(84) Designated Contracting States:
**AT BE CH DE ES FR GB GR IT LI NL**

(56) References cited:
**FR-A- 2 376 487**
**FR-A- 2 419 559**
**US-A- 4 429 823**

(73) Proprietor: **Bordignon, Abramo**
**Via Palmiro Togliatti, 32**
**I-20030 Senago Milano(IT)**

(72) Inventor: **Bordignon, Abramo**
**Via Palmiro Togliatti, 32**
**I-20030 Senago Milano(IT)**

(74) Representative: **Modiano, Guido et al**
**MODIANO, JOSIF, PISANTY & STAUB**
**Modiano & Associati Via Meravigli, 16**
**I-20123 Milano(IT)**

EP 0 293 805 B1

## Description

The present invention relates to a guide element structure engageable in sliding contact with a magnetic support.

As is known, in recording and playback devices, as well as in the cassettes of the magnetic support, generally constituted by a magnetic tape, guide elements constituted by small cylinders, pins and the like are currently present which engage by contact with the tape which, during playback or recording, is made to slide against said elements.

Considering in particular magnetic recording systems, small cylinders are provided which in practice delimit the path of the tape, which have in practice the function of guiding and keeping coplanar the magnetic support, as well as pins which act as abutment element, for example at the region where the tape-cleaning pad acts, or simply as a guide.

All said elements must have a particularly smooth surface, so as to not damage in any way both the support of the magnetic tape, generally provided in polyester, and the magnetic layer applied on the other side.

In the current art, the small return cylinders are produced, for example, by means of portions of tube which are externally coated with metallic material processed in a particular manner, so as to have a perfectly smooth surface capable of not creating abrasion or wear on said magnetic tape.

In all the adopted solutions it is necessary to perform complicated and expensive surface treatments, and, in many cases, to use relatively valuable and accordingly expensive materials.

Other known solutions involve the realization of said small cylinders or pins in synthetic plastic material which allows to obtain a smooth surface with simplified treatments with respect to small cylinders and pins produced in metallic material; this solution however has the disadvantage that the tape may abrade surface particles of the plastic material constituting the small cylinder, with the extremely severe disadvantage that said particles are dispersed towards the environment, accordingly causing a possibility of further phenomena of damage and wear.

Known from FR-A-2,376,487 is a guide element for magnetic supports comprising a vertical shaft located in the proximity of the magnetic support to be guided, a rotatable body mounted on the shaft, ball bearing raceways to ensure free rotational movement of the body, and a plurality of members connected to the body which are adapted for engagement with the magnetic support. The members may be constituted by slender hairs made of plastic material or coaxially arranged disks of plastic material such as polyamide.

Also known from FR-A1-2,419,559 is a guide element for magnetic supports as defined in the precharacterizing part of claim 1.

## SUMMARY OF THE INVENTION

The aim proposed by the invention is indeed to eliminate the above described disadvantages by providing a guide element structure engageable in sliding contact with a magnetic support which, in practice subverting the conventional concepts of said elements which substantially provided the execution of a substantially rigid and smooth contact surface, allows better conditions of sliding contact between the tape and the guide element, thus eliminating wear phenomena.

Within the above described aim, a particular object of the invention is to provide guide elements which, besides their intrinsic function of modifying the trajectory of the tape or magnetic support, in practice constitute a plurality of tape-cleaning elements allowing confinement of dust.

Still another aim of the present invention is to provide a low friction guide element which creates no constriction in the natural sliding of the magnetic support and which furthermore is capable of exerting in practice a reaction force on the magnetic tape which is substantially uniform and constant in all contact points.

The present invention may provide a guide element structure which is capable of having good electric conductivity, and possibly anti-static, characteristics.

The above described aims, are achieved by a guide element as defined in claim 1.

## BRIEF DESCRIPTION OF THE DRAWINGS

Further characteristics and advantages will become apparent from the description of some preferred but not exclusive embodiments of a guide element structure engageable in sliding contact with a magnetic support, illustrated only by way of non-limitative example in the accompanying drawings, wherein:

figure 1 is a guide element, constituted by a small tube;

figure 2 is a guide element constituted by a cylindrical element;

figure 3 is a guide element constituted by a cylindrical portion;

figure 4 is a guide element constituted by a pin;

figure 5 is a schematic perspective view of the guide element applied to the inside of a video cassette;

figure 6 is a schematic plan view of the guide elements, according to the invention, arranged inside a cassette.

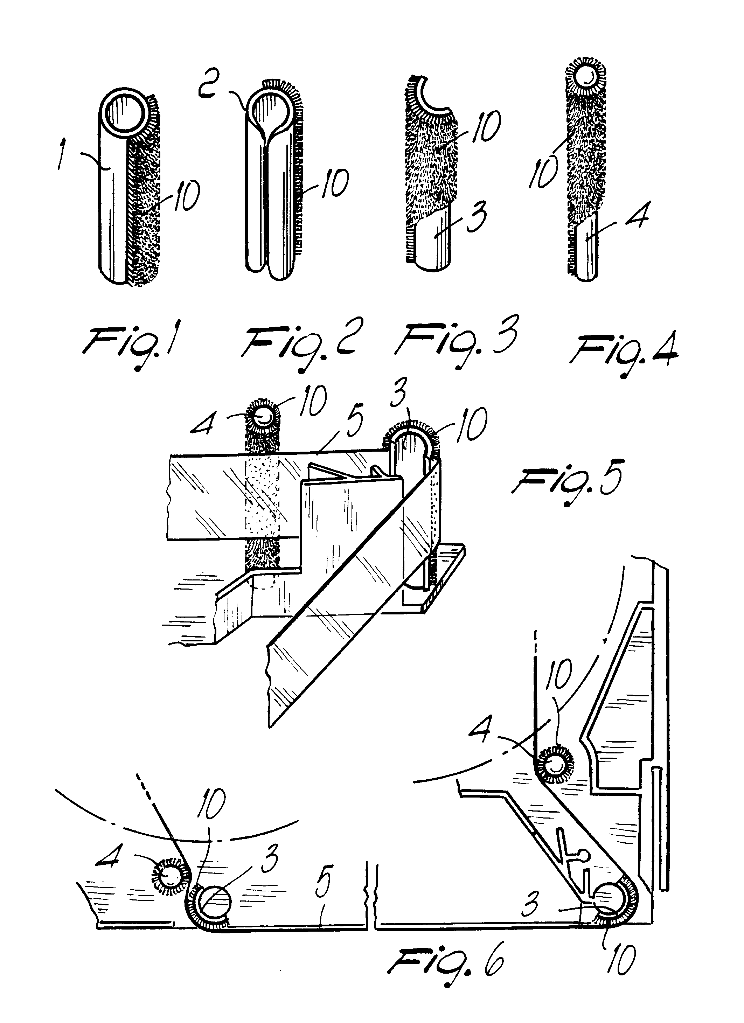

With reference to the above described figures, the guide element structure engageable in sliding contact with a magnetic support, according to the invention, may be constituted, as indicated in figure 1, by a small tube made of metallic material, by a cylindrical element 2 obtained by folding a small plate and the like as indicated in figure 2, or by a cylindrical portion 3, illustrated in figure 3; or by a pin 4, as illustrated in figure 4.

Naturally other configurations may be adopted among those which are typically observable in the known art.

The peculiar characteristic of the invention resides in the fact that on at least one portion of the guide body, which may be constituted by the elements 1, 2, 3 or 4, at least in the region which makes contact with the magnetic tape indicated at 5, a plurality of monofilaments 10 is provided.

The monofilaments of monothreads 10 in practice constitute a long and thin element which is embedded at one of its ends and is stressed so as to deform under combined bending and compressive stress. From experimental tests it has been established in practice that for a top angle, comprised between $20°$ and $80°$, defined by the tangent at the the terminal portion of the monothread and the fixing plane of the monothread, there occurs a variation of the elastic force which is contained within 27%, i.e. a force variable by less than + or - 13% for a truly considerable camber which can be estimated at approximately 40% of the length of the monothread.

To obtain said elements, monofilaments have been selected, cut to a predetermined measure by TOW, producing in practice a velveting with synthetic fibers with quality, diameter, length and number of monothreads per $cm^2$ according to well-defined values.

As previously mentioned, the necessity exists of having an extremely low friction coefficient, a good elasticity value of said monothreads, as well as the possibility of using monothreads with presettable anti-static or conductivity characteristics. To meet these requirements, synthetic fibers of the polyamide, acrylic type, of the polyester and cellulose triacetate type, or possibly other fibers which have the same features, may be used.

As to the measures, the fibers, also by virtue of their greater commercial availability, have been selected in the category comprised between 0.2 tex and 0.9 tex, which correspond to useful diameters comprised between 15 microns and 32 microns.

From the analysis of the various parameters of the fibers, i.e. diameter, elastic elongation modulus according to the minimum camber of adaptability to the various configurations of the guide elements, which camber is in the order of 0.25 mm, the selected limit values preferably provide the use of fibers with a diameter of 15 microns, useful length of 0.6 mm and number of monothreads assessable at approximately $400/mm^2$, or possibly diameters of 20 microns, length of 0.9 mm, density of $200/mm^2$, or possibly diameters of 32 microns, length of 1.6 mm and monothread density of 100 per $mm^2$.

The number, the diameter and the density of monothreads are in any case freely selectable even in ranges outside the above mentioned ones, which are those capable of imparting better required characteristics.

From experimental tests carried out, it occurs that the sliding friction coefficient K is comprised between 0.10 and 0.17, therefore with optimum values, and furthermore there occurs a dust confinement with considerably high value, naturally not observable in the solutions of the known art which, using surfaces as smooth as possible, has no element capable of performing dust confinement.

Taking merely by way of example a polyamide fiber with diameter of 20 microns, a length of 0.9 mm and a density of 250 monothreads per $mm^2$, a space for dust confinement greater than 32 $mm^3/cm^2$ is obtained.

Said monothreads, selected according to the above described criteria, may be applied to a supporting layer which, after being cut to size, is applied by glueing to the supporting body 1, 2, 3 or 4.

Another actuable solution consists of directly applying the monothreads on the portion of the supporting body which is affected by the magnetic support 5, simply by treating the affected surface in a manner similar to the treatment performed on the monofilament supporting layer, currently commercially available.

With this type of solution one achieves a drastic productive simplification, since is not necessary to perform the step of application of an element with monofilaments to the supporting body, but it is possible to apply the monothreads directly onto the guide body.

The monofilaments thus arranged have high stability for the different shapes on which they are applied, which are capable of exerting substantially constant specific pressures in every point of the surface of contact with the sliding magnetic support.

Furthermore, the use of a monofilament which arranges itself substantially perpendicular with respect to the tape and which is not connected to the flanking monofilaments, causes no constriction in the movement of the tape to be imparted, since the monofilaments have their preponderant orientation orthogonal with respect to the sliding of the magnetic tape and their unitary reaction force is of a few milligrams and their adaptation to torsional movements of the flexed apex of the monothread occurs with reaction forces of a few micrograms.

Another important aspect of the invention resides in the fact that said monothreads have a very reduced cost with respect to the currently used systems, which provide, as previously mentioned, complicated surface treatments to obtain a contact surface as smooth and resistant as possible.

Another aspect resides in the fact that the monothreads cannot be spontaneously engaged by any roughness or edge present on the sliding support, so that there are no outward dispersions of monothreads or the like, nor any sliding anomalies.

It is known that to keep the life of tape/head magnetic sliding systems very long, one must have very low friction values. It is known in tribology that, with equal employed materials, the friction coefficient and the specific pressure are mutually linked by an inverse correlation relation.

Currently the average specific pressures recommended by international norms must be of a few grams per mm$^2$. In the case of the invention, regardless of the material of the interposed cushion, the element constituted by the monothreads allows to achieve very low friction values. Friction values reduced considerably since the contact surface of the numerous monothreads per mm$^2$, arranged substantially uniformly on the entire surface, is much less than one thousandth of the affected surface and extremely high-density micropressures with considerably high localized specific pressures are therefore determined, such as to however determine very low average friction coefficients, advantageous for the specific use.

To the above it should be furthermore added that the invention allows, without modifications of the productive process, to choose conductive monothreads, constituted for example by carbon fibers or by polyamide fibers made conductive, for example, by graphite-coating, thus having the possibility of discharging the static electricity which accumulates, said electricity disperses itself through the pin system, the sensitive side of the support and head or final guide.

This characteristic is advantageously usable especially at the guide element which acts as abutment pin for the pad or tape-cleaning presser.

Said monofilaments 10 are provided in a region which has an extension at least equal to the transverse extension of the tape; advantageously it is possible to provide an extension of the region affected by the monofilaments 10 for a greater portion with respect to the width of the tape, so that at least part of the monofilaments engages by contact with the longitudinal edges of the tape, thus producing in practice a guide element for said tape.

From what has been described above it can thus be seen that the invention achieves the intended aim and objects, and in particular the fact is stressed that the provision of a guide element engageable in sliding contact with magnetic supports in general, constituted by a plurality of monofilaments which are fixed at their base, allows to produce a system the contact whereof occurs in practice as the combined bending and compressive stress on the various monothreads, with the consequent advantage of having optimum pressure distribution, extremely advantageous friction coefficients, together with the possibility of having a dust confinement of a very high value.

## Claims

1. Guide element engageable in sliding contact with a magnetic support, comprising a guide body (1, 2, 3, 4) arrangeable in a fixed position proximate to a magnetic support (5), a portion of said guide body defining a region of contact with said magnetic support (5), and filament means rigidly associated with said region of contact and adapted for sliding contact engagement with said magnetic support (5), characterized in that said filament means comprise a plurality of monofilaments (10) each having a fixed end connected directly to said portion of said guide body (1, 2, 3, 4) defining said region of contact with said magnetic support (5) , whereby to enhance the dust confinement capacity of said guide element and to reduce the coefficient of friction between said guide element and said magnetic support.

2. Guide element according to claim 1, characterized in that said monofilaments (10) affect a portion of said guide body (1, 2, 3, 4) having an extension which is greater than the width of said magnetic support (5) to engage with the longitudinal edges of said magnetic support (5), whereby to act as a transverse guide element for said magnetic support.

3. Guide element according to claim 1, 2 or 3, characterized in that said monofilaments (10) each have a diameter comprised between 15 microns and 32 microns, a useful length comprised between 0.6 mm and 1.6 mm and a monothread density comprised between 400 and 100 monothreads per mm$^2$.

4. Guide element according to claim 1, 2 or 3, characterized in that said monofilaments (10) are made of electrically conductive material.

5. Guide element according to claim 1, 2 or 3, characterized in that said monofilaments (10) are produced in synthetic plastic material treated with electrically conductive material.

6. Guide element according to claim 1 or 2, characterized in that said guide body (1) comprises a tubular portion (1).

7. Guide element according to claim 1 or 2, characterized in that said guide body (2) comprises a portion (2) folded to assume a rounded configuration towards said magnetic support (5).

8. Guide element according to claim 1 or 2, characterized in that said guide body (3) has a configuration defining a portion of a cylindrical surface (3).

9. Guide element according to claim 1 or 2, characterized in that said guide body (4) comprises a pin (4).

**Revendications**

1. Elément de guidage susceptible d'entrer en contact glissant avec un support magnétique, comprenant un corps de guide (1, 2, 3, 4) susceptible d'être disposé de manière fixe à proximité d'un support magnétique (5), une partie dudit corps de guide définissant une région de contact avec ledit support magnétique (5) et des moyens à filaments rigidement associés avec ladite région de contact et susceptibles d'entrer en contact glissant avec ledit support magnétique (5), caractérisé en ce que lesdits moyens à filaments comprennent une pluralité de monofilaments (10) ayant chacun une extrémité fixe reliée directement à ladite portion dudit corps de guide (1, 2, 3, 4) définissant ladite région de contact avec ledit support magnétique (5), afin d'augmenter les propriétés d'emprisonnement de poussières dudit élément de guidage, et de réduire le coefficient de frottement entre ledit élément de guidage et ledit support magnétique.

2. Elément de guidage selon la revendication 1, caractérisé en ce que lesdits monofilaments (10) sont disposés sur une partie dudit corps de guide (1, 2, 3, 4) dont la longueur est supérieure à la largeur dudit support magnétique (5) afin de s'engager avec les bords longitudinaux dudit support magnétique (5), afin de jouer le rôle d'un élément de guidage transverse pour ledit support magnétique.

3. Elément de guidage selon l'une des revendications 1 ou 2, caractérisé en ce que lesdits monofilaments ont chacun un diamètre compris entre 15 microns et 32 microns, une longueur utile comprise entre 0,6 mm et 1, 6 mm, et une densité de monofils comprise entre 400 et 100 monofils par mm2.

4. Elément de guidage selon l'une des revendications 1, 2 ou 3, caractérisé en ce que lesdits monofilaments (10) sont constitués de matériaux électriquement conducteurs.

5. Elément de guidage selon l'une des revendications 1, 2 ou 3, caractérisé en ce que lesdits monofilaments (10) sont réalisés en un matériau plastique synthétique traité avec du matériau électriquement conducteur.

6. Elément de guidage selon l'une des revendications 1 ou 2, caractérisé en ce que ledit corps de guide comprend une partie tubulaire (1).

7. Elément de guidage selon l'une des revendications 1 ou 2, caractérisé en ce que ledit corps de guide (2) comprend une partie (2) pliée définissant une configuration arrondie tournée vers ledit support magnétique (5).

8. Elément de guidage selon l'une des revendicatyions 1 ou 2, caractérisé en ce que ledit corps de guide (3) présente une configuration définissant une partie de surface cylindrique (3).

9. Elément de guidage selon l'une des revendications 1 ou 2, caractérisé en ce que ledit corps de guide (3) comprend une aiguille (4).

**Patentansprüche**

1. Führungselement als Gleitkontakt für einen Magnetträger, mit einem Führungskörper (1,2,3,4), der ortsfest neben einem Magnetträger (5) plazierbar ist und einen eine Kontaktfläche für den Magnetträger (5) bildenden Abschnitt sowie ein fest mit der Kontaktfläche verbundenes, zur gleitenden Kontaktanlage am Magnetträger (5) bestimmtes Filament aufweist, dadurch gekennzeichnet, daß das Filament eine Vielzahl von Einzelfäden (10) aufweist, die jeweils mit einem Ende unmittelbar mit dem die Kontaktfläche für den Magnetträger (5) bildenden Abschnitt des Führungskörpers (1,2,3,4) fest verbunden sind, um so die Staubaufnahmekapazität des Führungselementes zu erhöhen und den Reibungskoeffizienten zwischen Führungselement und Magnetträger zu verringern.

2. Führungselement nach Anspruch 1, dadurch gekennzeichnet, daß die Einzelfäden (10) einen Bereich des Führungskörpers (1,2,3,4) bedecken, der größer ist als die Breite des Magnetträgers (5), um so an dessen Längsrändern anzuliegen und dadurch als Querführung für den Magnetträger zu fungieren.

3. Führungselement nach Anspruch 1, 2 oder 3, dadurch gekennzeichnet, daß jeder Einzelfaden (10) einen Durchmesser zwischen 15 Mikron und 32 Mikron, eine Nutzlänge zwischen 0,6 mm und 1,6 mm und eine Einzelfaserdichte zwischen 400 und 100 Einzelfasern pro $mm^2$ aufweist.

4. Führungselement nach Anspruch 1, 2 oder 3, dadurch gekennzeichnet, daß die Einzelfäden (10) aus elektrisch leitendem Material bestehen.

5. Führungselement nach Anspruch 1, 2 oder 3, dadurch gekennzeichnet, daß die Einzelfäden (10) aus mit elektrisch leitendem Material behandeltem synthetischen Kunststoff hergestellt sind.

6. Führungselement nach Anspruch 1 oder 2, dadurch gekennzeichnet, daß der Führungskörper (1) einen Hülsenabschnitt (1) aufweist.

7. Führungselement nach Anspruch 1 oder 2, dadurch gekennzeichnet, daß der Führungskörper (2) einen Abschnitt (2) aufweist, der zu einer dem Magnetträger (5) zugewandten Rundung gebogen ist.

8. Führungselement nach Anspruch 1 oder 2, dadurch gekennzeichnet, daß der Führungskörper (3) die Form eines zylindrischen Oberflächenabschnitts (3) aufweist.

9. Führungselement nach Anspruch 1 oder 2, dadurch gekennzeichnet, daß der Führungskörper (4) einen Zapfen (4) aufweist.

Fig.1　　Fig.2　　Fig.3　　Fig.4

Fig.5

Fig.6

7